# FASCICULE DE BREVET EUROPEEN

(11) **EP 1 291 597 B1**
(45) Date de publication et mention de la délivrance du brevet: **28.03.2007**
(21) Numéro de dépôt: 02292179.5
(22) Date de dépôt: 04.09.2002
(51) Int. Cl.: F26B 21/08, F26B 23/00, D06F 58/20

(54) **Procédé et appareil de séchage par circulation d'air**
Verfahren und Vorrichtung zur Trocknung mittels Luftzirkulation
Process and apparatus for drying by air circulation

(30) Priorité: 05.09.2001 FR 0111480
(43) Date de publication de la demande: 12.03.2003
(73) Titulaire: Brandt Industries, 92500 Rueil Malmaison (FR)
(72) Inventeur: Geay, Jean-Claude, 85320 Chateau Guibert (FR); Soulard, Antoine, 85140 Les Essarts (FR); Ouvrard, Gilles, 85000 La Roche sur Yon (FR); Raoui, Essaid, 85000 La Roche sur Yon (FR)
(74) Mandataire: Santarelli

(56) Documents cités:
- DE-A- 3 202 586
- FR-A- 2 453 930
- FR-A- 2 539 153

## Description

La présente invention concerne un procédé et un appareil de séchage par circulation d'air.

Le domaine général de l'invention est celui des appareils de séchage comprenant une enceinte de séchage dans laquelle sont placés des objets à sécher, et plus particulièrement le domaine des sèche-linge à tambour rotatif permettant le séchage du linge par un flux d'air chaud.

La présente invention s'applique à un appareil de séchage dans lequel l'air de séchage traverse un condenseur après son passage dans enceinte de séchage.

Des sèche-linge à condensation sont bien connus. Ils fonctionnent généralement avec un circuit fermé de circulation d'air de séchage, dans lequel le flux d'air chargé en humidité en sortie de l'enceinte de séchage traverse le condenseur de manière à extraire la vapeur d'eau contenue dans le flux d'air et à récupérer celle-ci dans un bac de condensation.

A la sortie du condenseur, l'air de séchage est réintroduit dans l'enceinte de séchage après réchauffement grâce à des moyens de chauffage placés dans une gaine d'amenée d'air, en amont de l'enceinte de séchage. Classiquement, ces moyens de chauffage de l'air sont constitués d'une résistance de chauffage électrique.

Parallèlement à ce circuit de circulation d'air de séchage, l'appareil de séchage comporte également un circuit de circulation d'un fluide caloporteur traversant le condenseur pour refroidir celui-ci.

Généralement, dans les sèche-linge connus, ce circuit de refroidissement est un circuit ouvert, le refroidissement du condenseur étant assuré par un flux d'air ambiant.

Lors du passage de l'air dans le condenseur, la température de ce flux d'air s'élève car l'énergie ayant servi à sécher le linge dans l'enceinte de séchage est transmise à ce flux d'air ou, en d'autres termes, la chaleur de condensation de la vapeur d'eau de l'air de séchage est récupérée par le flux d'air.

Cette chaleur de condensation est alors évacuée par le flux d'air de refroidissement dans un appareil de séchage classique.

On connaît également un appareil de séchage décrit dans le document FR 2 539 153 dans lequel la chaleur de condensation est stockée puis utilisée pour chauffer l'air de séchage.

Cependant dans cet appareil, lorsque la chaleur de condensation est utilisée pour chauffer l'air de séchage, de l'air chaud et humide est évacué du sèche-linge, sans condensation préalable de la vapeur d'eau.

La présente invention a pour but de résoudre cet inconvénient et de proposer un procédé et un appareil de séchage procurant une réduction importante de la consommation énergétique lors de l'opération de séchage.

A cet effet, l'invention vise tout d'abord un procédé de séchage par circulation d'air de séchage dans un circuit comprenant une gaine d'amenée d'air comportant des moyens de chauffage de l'air, une enceinte de séchage dans laquelle sont placés des objets à sécher, une gaine de sortie d'air et au moins un condenseur dans lequel circule un fluide caloporteur, le procédé de séchage comprenant une phase d'accumulation de chaleur dans laquelle l'air de séchage est chauffé par les moyens de chauffage dans la gaine d'amenée d'air et refroidi par le condenseur en sortie de l'enceinte de séchage, le fluide caloporteur étant stocké dans un réservoir après passage dans le condenseur et une phase d'utilisation de la chaleur accumulée dans laquelle l'air de séchage introduit dans la gaine d'amenée d'air est chauffée par le fluide caloporteur stocké dans le réservoir.

Conformément à l'invention, dans ladite phase d'utilisation, l'air chauffé est introduit dans l'enceinte de séchage puis refroidi par un condenseur en sortie de l'enceinte de séchage.

Le procédé de séchage conforme à l'invention permet ainsi de récupérer et d'utiliser l'énergie de condensation transférée au fluide caloporteur dans le condenseur.

Lors de la phase d'utilisation de la chaleur accumulée précédemment, l'air de séchage peut être chauffé directement par l'énergie stockée dans le fluide caloporteur de telle sorte que l'énergie à fournir par les moyens de chauffage pour chauffer l'air avant son introduction dans l'enceinte de séchage peut être fortement diminuée. Cet air de séchage est ensuite évacué ou réutilisé après condensation de la vapeur d'eau extraite des objets à sécher.

La consommation énergétique globale lors de la mise en oeuvre de ce procédé de séchage conforme à l'invention est ainsi diminuée.

Selon une caractéristique préférée de l'invention, ce procédé de séchage comprend en outre une phase de montée en température dans laquelle l'air de séchage dans la gaine d'amenée d'air est chauffé par les moyens de chauffage et la circulation du fluide caloporteur dans le condenseur est sensiblement nulle.

Le refroidissement du condenseur est ainsi diminué pendant la phase de montée en température de telle sorte que cette phase de montée en température est accélérée.

Selon une autre caractéristique préférée de l'invention, le procédé de séchage comprend, entre une phase d'accumulation et une phase d'utilisation de la chaleur, une phase de refroidissement dans laquelle l'air de séchage est refroidi au travers d'un échangeur.

Cette phase de refroidissement peut être rendue nécessaire pour abaisser la température de l'air de séchage à un niveau de température inférieur à celui du fluide caloporteur stocké, avant utilisation de la chaleur accumulée.

Selon une caractéristique préférée de l'invention, à l'étape d'utilisation de la chaleur accumulée, les moyens de chauffage de la gaine d'amenée d'air sont inopérants.

L'extinction des moyens de chauffage lors de la phase d'utilisation de la chaleur accumulée permet de diminuer fortement la consommation énergétique de l'appareil de séchage.

Le séchage des objets dans l'enceinte de séchage est ainsi réalisé à une température d'évaporation de niveau inférieur à celui de l'énergie stockée dans le fluide caloporteur lors de la phase d'accumulation de chaleur.

Le processus d'évaporation de l'eau dans l'enceinte de séchage, lors de cette phase d'utilisation de la chaleur, est donc identique à celui de la phase d'accumulation de chaleur tout en se déroulant à une plus basse température.

Selon un second aspect, l'invention concerne également un appareil de séchage comprenant un circuit de circulation d'air de séchage comprenant :
- une gaine d'amenée d'air comportant des moyens de chauffage de l'air;
- une enceinte de séchage dans laquelle sont placés des objets à sécher; et
- une gaine de sortie d'air dans laquelle est disposée un condenseur refroidi par un fluide caloporteur et un circuit de circulation du fluide caloporteur comprenant successivement ledit condenseur et un réservoir adapté à stocker le fluide caloporteur chauffé en sortie du condenseur.

Conformément à l'invention, cet appareil de séchage comprend:
- un autre échangeur de chaleur disposé dans le circuit de circulation d'air en amont de l'enceinte de séchage.

Grâce au réservoir et à l'échangeur de chaleur disposés dans le circuit de circulation du fluide caloporteur, on peut alternativement stocker le fluide caloporteur chauffé, puis utiliser celui-ci pour réchauffer l'air dans le circuit de circulation d'air avant son introduction dans l'enceinte de séchage.

On utilise ainsi la source potentielle d'énergie correspondant à la chaleur de condensation stockée dans le fluide caloporteur en sortie du condenseur.

Selon une caractéristique préférée de l'invention, le réservoir comprend une série de chicanes adaptées à former des compartiments entre une entrée et une sortie du réservoir.

Ces chicanes évitent le mélange du fluide entrant dans le réservoir avec le fluide stocké dans celui-ci de telle sorte que la montée en température du fluide caloporteur dans le réservoir est plus rapide lors de la phase d'accumulation de la chaleur.

Selon une autre caractéristique de l'invention, le circuit de circulation du fluide caloporteur comprend un premier réservoir entre le condenseur et l'échangeur de chaleur, adapté à stocker le fluide caloporteur chauffé en sortie du condenseur, et un second réservoir disposé en sortie de l'échangeur de chaleur, adapté à stocker le fluide caloporteur refroidi.

Le fluide caloporteur circule ainsi entre le premier réservoir et le second réservoir.

Cette disposition à deux réservoirs bien que plus encombrante, permet d'optimiser la durée de la phase d'accumulation de chaleur car elle garantit un écart de température élevé et constant entre le fluide caloporteur traversant le condenseur et l'air humide pendant la phase d'accumulation de chaleur.

Dans une application particulièrement pratique de l'invention, cet appareil de séchage est adapté à sécher du linge et peut être à titre d'exemple un sèche-linge ou une machine lavante-séchante.

D'autres particularités et avantages de l'invention apparaîtront encore dans la description ci-après.

Aux dessins annexés, donnés à titre d'exemples non limitatifs :
- la figure 1 est une représentation schématique d'un appareil de séchage conforme à un premier mode de réalisation de l'invention, dans une configuration de mise en oeuvre d'une phase d'accumulation de chaleur du procédé de séchage ;
- la figure 2 est une vue analogue à la figure 1, l'appareil de séchage étant dans une configuration de mise en oeuvre d'une phase d'utilisation de chaleur accumulée du procédé de séchage ;
- la figure 3 est une représentation schématique de l'appareil de séchage, dans une configuration analogue à la figure 2, selon un deuxième mode de réalisation de l'invention ; et
- la figure 4 est une représentation schématique d'un appareil de séchage conforme à un troisième mode de réalisation de l'invention.

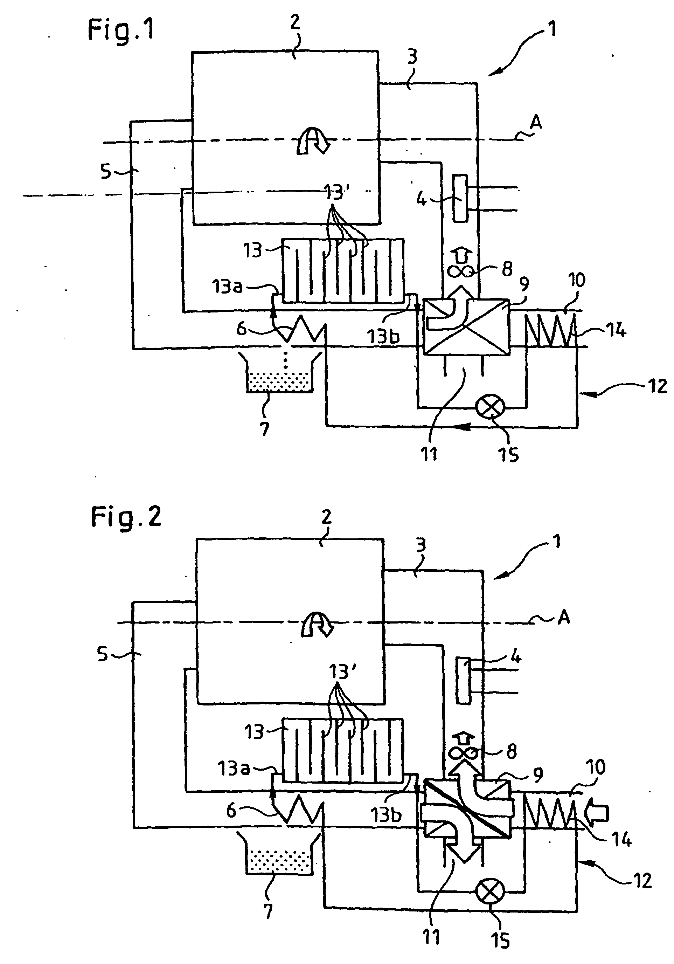

On va décrire tout d'abord, en référence aux figures 1 et 2, un appareil de séchage conforme à un premier mode de réalisation de l'invention.

Ici, et de manière nullement limitative, l'appareil de séchage est adapté à sécher du linge.

Cet appareil peut être un sèche-linge ou une machine lavante-séchante domestique.

Ce sèche-linge 1 comporte tout d'abord une enceinte de séchage 2 dans laquelle sont placés les objets à sécher.

Ici, cette enceinte de séchage est un tambour 2 rotatif autour d'un axe horizontal A, le linge étant placé dans le tambour 2.

Afin de réaliser le séchage du linge, un circuit de circulation d'air de séchage est prévu de façon à introduire de l'air chaud dans le tambour 2.

Ce circuit de circulation d'air de séchage comprend une gaine d'amenée d'air 3 disposée en amont du tambour 2 suivant le sens de circulation de l'air.

Dans cette gaine d'amenée d'air 3 sont placés des moyens de chauffage de l'air 4, constitués par exemple d'une résistance électrique de chauffage.

En sortie du tambour 2, une gaine de sortie d'air 5 permet d'extraire l'air chargé d'humidité.

Un condenseur 6 est placé dans cette gaine de sortie d'air 5 de manière à extraire par condensation la vapeur d'eau dont s'est chargé l'air de séchage dans le tambour au contact du linge.

Ce condenseur 6 coopère généralement avec un bac de condensation 7 permettant de récupérer la vapeur d'eau condensée.

Dans la configuration illustrée à la figure 1, et comme cela sera mieux compris en référence à la description du procédé de séchage mis en oeuvre dans cet appareil de séchage, le circuit de circulation d'air est un circuit fermé de telle sorte que l'air en sortie de la gaine de sortie 5, après son passage dans le condenseur 6, est réintroduit dans la gaine d'amenée d'air 3, en amont des moyens de chauffage 4.

Afin d'assurer la circulation d'air dans ce circuit, un ventilateur 8 peut être disposé à tout endroit du circuit.

Dans ce mode de réalisation, un clapet 9 est placé dans le circuit de circulation d'air de séchage, entre la sortie de la gaine de sortie 5 et l'entrée de la gaine d'amenée 3.

Ce clapet 9 est mobile entre une position ouverte et une position fermée suivant les phases du procédé de séchage qui sera décrit ci-après.

Ce clapet 9 peut être dans une position fermée telle qu'illustrée à la figure 1, dans laquelle le circuit de circulation d'air de séchage est fermé. Dans cette position, l'air en sortie du condenseur 6 est réintroduit dans la gaine d'amenée d'air 3.

Le clapet 9 peut être alternativement dans une position ouverte telle qu'illustrée à la figure 2, dans laquelle le circuit de circulation d'air de séchage est ouvert. Dans cette position, le clapet 9 permet de mettre en communication la gaine d'amenée d'air 3 avec une arrivée d'air neuf 10, permettant d'introduire de l'air pris dans l'environnement de l'appareil de séchage dans la gaine d'amenée d'air 3.

Dans cette position du clapet 9, l'air de séchage en sortie du condenseur 6 est évacué par un orifice de sortie 11.

Le condenseur 6 est refroidi grâce à la circulation d'un fluide caloporteur qui est ici, de manière non limitative, de l'eau.

Un circuit de circulation 12 de l'eau est ainsi prévu pour faire circuler l'eau dans le condenseur 6 de telle sorte que l'eau récupère la chaleur de condensation dégagée par l'air de séchage traversant le condenseur 6.

Ce circuit de circulation d'eau 12 comprend un réservoir 13 disposé en aval du condenseur 6 suivant le sens de circulation de l'eau dans le circuit de circulation 12.

Ce réservoir 13 est adapté à stocker l'eau chauffée en sortie du condenseur 6.

Eventuellement, ce réservoir d'eau 13 peut être calorifugé afin de limiter les pertes de chaleur avec l'environnement.

De préférence, ce réservoir 13 comprend des chicanes 13' disposées sur le trajet de l'eau, entre une entrée 13a et une sortie 13b du réservoir 13.

Ces chicanes 13' forment ainsi une série de compartiments communiquant les uns avec les autres, alternativement en haut ou en bas du réservoir 13, de telle sorte que l'eau entrant dans le réservoir 13 ne se mélange pas avec l'eau déjà stockée dans ce réservoir.

Cette disposition permet, dans une phase d'accumulation de chaleur dans le réservoir 13, de ne pas mélanger l'eau chauffée au niveau du condenseur 6 avec l'eau plus froide stockée et sortant du réservoir 13.

Ce circuit de circulation d'eau 12 comprend également un échangeur de chaleur 14 qui est disposé dans le circuit de circulation d'air, en amont de l'enceinte de séchage 2.

Ici, l'échangeur de chaleur 14 est logé dans l'arrivée d'air neuf 10 de telle sorte que l'air neuf entrant dans la gaine d'amenée d'air 3 est chauffé par l'échangeur de chaleur 14.

Une pompe 15 permet d'assurer la circulation de l'eau dans le circuit de circulation 12.

On va maintenant décrire le procédé de séchage conforme à l'invention mis en oeuvre dans cet appareil de séchage.

Lors d'un cycle de séchage par circulation d'air chaud dans le tambour 2, le procédé de séchage comprend une phase d'accumulation de chaleur et une phase d'utilisation de la chaleur accumulée.

De préférence, dans un même cycle de séchage, le procédé comprend plusieurs phases d'accumulation de chaleur et plusieurs phases d'utilisation de la chaleur accumulée successives.

De préférence, en début d'un cycle de séchage, le procédé comprend une phase de montée en température de l'air de séchage. Celui-ci est mis en circulation par le ventilateur 8 et chauffé au niveau des moyens de chauffage 4.

Pendant cette phase de montée en température, le circuit de circulation d'eau 12 est arrêté, l'eau étant stockée dans le réservoir 13.

Cette phase de montée en température est interrompue par exemple lorsque la température de l'air de séchage a atteint une valeur de consigne prédéterminée.

Ensuite, une phase d'accumulation de la chaleur est mise en oeuvre.

Lors de cette d'une phase d'accumulation de chaleur, l'appareil de séchage est placé dans une configuration telle qu'illustrée à la figure 1, dans laquelle le clapet 9 est fermé et le circuit de circulation d'air de séchage est fermé.

L'air de séchage dans la gaine d'amenée d'air 3 est chauffé par les moyens de chauffage 4, traverse le tambour 2 en se chargeant de l'humidité du linge et est évacué dans la gaine de sortie 5 jusqu'au condenseur 6 où il est refroidi.

Après extraction par condensation de la vapeur d'eau, l'air est réintroduit dans la gaine d'amenée d'air 3 en amont des moyens de chauffage 4.

Parallèlement à cette circulation de l'air de séchage, le fluide caloporteur circule dans le circuit de circulation 12, en circulation fermée, entre la sortie 13b et l'entrée 13a du réservoir 13 qui peut ainsi stocker l'eau chauffée après son passage dans le condenseur 6.

Cette phase d'accumulation de chaleur est interrompue lorsque l'une ou plusieurs des grandeurs suivantes ont atteint une consigne préfixée :
- température de l'eau à un point du circuit de circulation 12 ou dérivée de cette température ;
- température de l'air de séchage à un point du circuit d'air ou dérivée de cette température;
- écart de température de l'eau entre deux points du circuit de circulation 12 ou dérivée de cet écart ;
- écart de température de l'air entre deux points du circuit d'air ou dérivée de cet écart ; ou
- durée écoulée.

Par exemple, une température de consigne de l'eau dans le réservoir 13 est déterminée en fonction de la température maximale admissible dans le circuit d'air de séchage.

Une température de consigne appropriée est égale par exemple à 65° C.

Cette phase d'accumulation de chaleur est suivie d'une phase d'utilisation de la chaleur accumulée, dans laquelle l'appareil de séchage est dans une configuration telle qu'illustrée à la figure 2.

Dans cette configuration, le clapet 9 est ouvert de telle sorte que le circuit de circulation d'air de séchage est un circuit ouvert.

Dans cette phase d'utilisation de la chaleur accumulée, l'air de séchage introduit dans la gaine d'amenée d'air 3 est chauffé au contact de l'eau stockée dans le réservoir 13, qui circule dans l'échangeur de chaleur 14 placé dans l'arrivée d'air neuf 10.

De préférence, pendant cette étape d'utilisation de la chaleur accumulée, les moyens de chauffage 4 de la gaine d'amenée d'air 3 sont inopérants.

Ainsi, pendant la phase d'accumulation de chaleur, la consommation énergétique diffère de celle d'un procédé classique de séchage par condensation par l'absence de ventilation d'un condenseur air-air classique.

La consommation énergétique nécessaire pour la circulation de l'eau dans le circuit de refroidissement est quant à elle négligeable.

En outre, pendant la phase d'utilisation de la chaleur accumulée, la consommation énergétique est fortement diminuée du fait de l'extinction des moyens de chauffage 4.

Lors de cette phase d'utilisation de la chaleur accumulée, l'air chaud traverse le linge à une température plus basse que celle utilisée lors de la phase d'accumulation de chaleur.

Le processus d'évaporation de l'eau contenue dans le linge se déroule ainsi à plus basse température.

L'air en sortie du condenseur 6 est alors évacué, après refroidissement et condensation de la vapeur d'eau, vers l'extérieur du sèche-linge, par la sortie 11.

Le procédé de séchage comprend ainsi une alternance de phases d'accumulation de chaleur et de phases d'utilisation de la chaleur accumulée.

Lorsque comme ici le fluide caloporteur est de l'eau, ce procédé de séchage peut comprendre en outre une étape de renouvellement périodique de l'eau qui circule dans le condenseur 6.

L'appareil et le procédé de séchage conformes à invention permettent ainsi de réduire la consommation énergétique d'un sèche-linge par rapport à un sèche-linge traditionnel équipé d'un système de chauffage par résistance électrique.

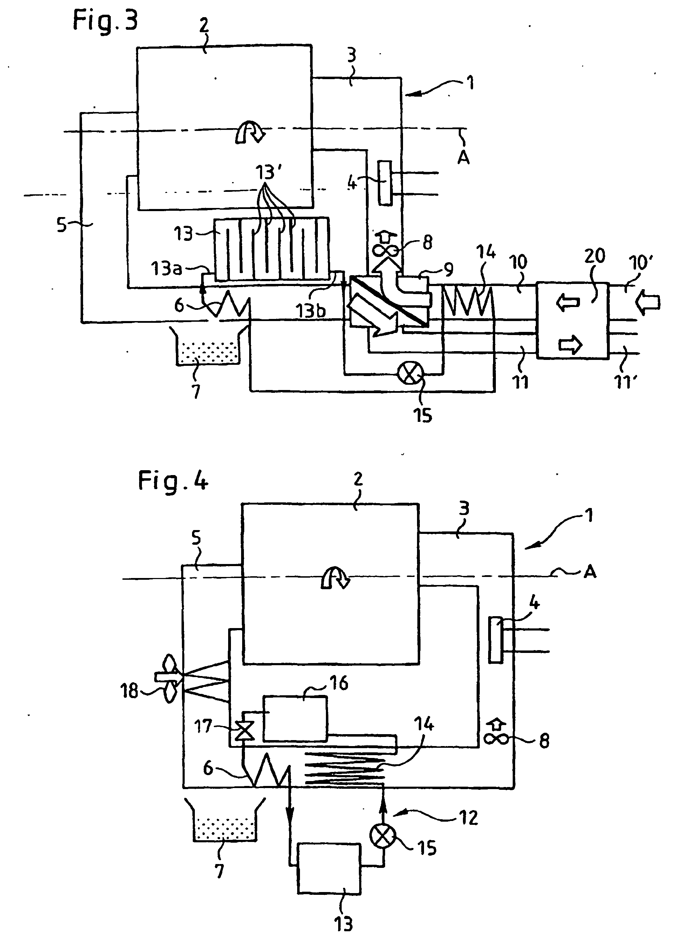

En référence à la figure 3, on va décrire un deuxième mode de réalisation d'un appareil de séchage conforme à l'invention adapté à mettre en oeuvre le procédé de séchage décrit précédemment.

Ce deuxième mode de réalisation est en tout point identique au premier mode de réalisation décrit précédemment, hormis la présence d'un échangeur de chaleur 20 disposé au niveau de l'arrivée d'air neuf.

Les éléments constitutifs de cet appareil de séchage, identiques à ceux de l'appareil de séchage conforme au premier mode de réalisation, ne seront pas redécrits ici et portent les mêmes références numériques.

Dans ce deuxième mode de réalisation, un échangeur air-air est disposé entre l'arrivée d'air neuf 10 et l'orifice de sortie d'air 11.

Plus précisément, cet échangeur air-air peut être disposé entre des gaines 10' et 11' prolongeant respectivement l'arrivée d'air neuf 10 et l'orifice de sortie 11.

Cette disposition d'un échangeur 20 permet de préchauffer l'air neuf entrant dans la machine par l'air évacuée au niveau de l'orifice de sortie 11, pendant la phase d'utilisation de la chaleur du procédé de séchage conforme à l'invention.

L'air neuf est ainsi préchauffé avant d'atteindre l'échangeur de chaleur 14.

Cette disposition permet d'utiliser pendant la phase d'utilisation de la chaleur, l'énergie dispensée par l'air évacué du circuit de séchage au niveau du clapet 9.

Un troisième mode de réalisation d'un appareil de séchage conforme à l'invention est illustré à la figure 4.

Cet appareil de séchage est également adapté à mettre en oeuvre le procédé de séchage conforme à l'invention. Les éléments constitutifs de cet appareil de séchage, identiques à ceux de appareil de séchage conforme au premier mode de réalisation, ne seront pas redécrits ici et portent les mêmes références numériques.

Dans ce mode de réalisation, le circuit de circulation 12 du fluide caloporteur comprend deux réservoirs permettant de stocker le fluide caloporteur, ici de l'eau.

Un premier réservoir 13 est disposé entre le condenseur 6 et l'échangeur de chaleur 14, suivant le sens de circulation de l'eau dans le circuit de refroidissement 12.

Ce réservoir 13 est adapté à stocker l'eau chauffée en sortie du condenseur 6.

Un second réservoir 16 est disposé entre l'échangeur de chaleur 14 et le condenseur 6, suivant le sens de circulation de l'eau dans le circuit de refroidissement 12.

Ce second réservoir 16 disposé en sortie de l'échangeur de chaleur 14 est adapté à stocker le fluide caloporteur refroidi.

Deux pompes 15, 17 permettent d'assurer séparément la circulation de l'eau entre l'un ou l'autre des réservoirs 13, 16.

Une des deux pompes 15, 17 peut être supprimée, la circulation de l'eau pouvant être assurée par gravité ou par siphonnage.

Ici, le circuit de circulation 12 de l'eau est un circuit fermé incluant successivement le premier réservoir 13, l'échangeur de chaleur 14, le second réservoir 16 et le condenseur 6.

Dans ce mode de réalisation, le circuit de circulation d'air de séchage comprend en outre un condenseur 18 (à air par exemple) disposé en sortie du tambour 2, et par exemple dans la gaine de sortie d'air 5.

Contrairement au premier mode de réalisation, le circuit de circulation d'air de séchage est en permanence un circuit fermé.

Ainsi le procédé de séchage comporte tout d'abord une phase de montée en température dans laquelle l'énergie nécessaire est fournie par les moyens de chauffage. Cette phase est interrompue lorsque l'une ou plusieurs des grandeurs suivantes ont atteint une consigne préfixée :
- température de l'air de séchage à un point du circuit d'air ou dérivée de cette température ;
- écart de température de l'air entre deux points du circuit d'air ou dérivée de cet écart ; ou
- durée écoulée.

Le procédé de séchage comporte ensuite une phase d'accumulation de chaleur, dans laquelle l'eau froide contenue intégralement dans le second réservoir 16 est transférée de ce dernier vers le premier réservoir 13 sous l'action de la pompe 17, en traversant le condenseur 6.

L'eau s'écoule ainsi depuis le réservoir 16 vers le réservoir 13 en s'échauffant au travers du condenseur 6 placé dans le flux d'air chaud en sortie du tambour 2.

Cette réalisation à deux réservoirs 13, 16 optimise la durée de la phase d'accumulation de chaleur car elle garantit un écart de température élevé et constant entre l'eau du circuit de refroidissement 12 et l'air de séchage humide traversant le condenseur 6.

Cette phase d'accumulation de chaleur est interrompue lorsque l'une ou plusieurs des grandeurs suivantes ont atteint une consigne préfixée :
- niveau dans l'un des deux réservoirs ;
- écart de température de l'air entre deux points du circuit d'air ou dérivée de cet écart ; ou
- durée écoulée.

Une phase de refroidissement est ensuite rendue nécessaire pour abaisser la température du circuit d'air à un niveau de température inférieur à celui de l'eau chaude stockée dans le premier réservoir 13. Pendant cette phase de refroidissement, le condensateur 18 et le ventilateur 8 sont actifs.

Dans une phase d'utilisation de la chaleur du procédé de séchage conforme à l'invention, l'eau est ensuite transférée du premier réservoir 13 vers le second réservoir 16 tout en traversant l'échangeur de chaleur 14 de manière à chauffer l'air de séchage entrant dans la gaine d'amenée d'air 3.

Le condenseur à air 18 permet d'extraire la vapeur d'eau contenue dans le flux d'air de séchage en sortie du tambour 2 dès lors que dans la phase d'utilisation de la chaleur, le condenseur 6 est inopérant, l'eau ne circulant pas entre le second réservoir 16 et le premier réservoir 13 du circuit de circulation 12.

Ce circuit d'air de séchage peut être ainsi un circuit fermé garantissant un taux d'étanchéité plus élevé qu'un circuit incluant un clapet 9.

Ici aussi le procédé de séchage peut comporter une étape de renouvellement périodique de l'eau qui circule dans le circuit de circulation d'eau 12.

En outre, le second réservoir 16, adapté à stocker l'eau refroidie, pourrait être disposé dans la gaine de sortie d'air 5, au niveau du condenseur 18, afin d'améliorer la condensation de l'humidité extraite du flux d'air de séchage. De même, le premier réservoir 13 peut être placé dans le circuit de circulation d'air, avant l'élément chauffant 4, afin d'améliorer la récupération de chaleur.

Bien entendu, de nombreuses modifications peuvent être apportées aux exemples de réalisation décrits précédemment sans sortir du cadre de l'invention.

Ainsi, le circuit de circulation de fluide caloporteur à deux réservoirs, permettant d'accélérer la phase d'accumulation de chaleur dans l'un des réservoirs, pourrait être mis en oeuvre dans un appareil de séchage similaire à celui des premier et deuxième modes de réalisation, comportant un clapet mobile permettant d'alterner le fonctionnement en circuit ouvert ou fermé de circulation d'air de séchage.

En outre, pendant la phase d'utilisation de la chaleur accumulée, l'énergie fournie par les moyens de chauffage pourrait être simplement diminuée, sans que ces derniers ne soient complètement inopérants.

Par ailleurs, le fluide caloporteur peut être de l'eau glycolée pour éviter le risque de gel ou encore de l'eau traitée anti-bactéries.

## Revendications

1. Procédé de séchage par circulation d'air de séchage dans un circuit comprenant une gaine d'amenée d'air (3) comportant des moyens de chauffage (4) de l'air, une enceinte de séchage (2) dans laquelle sont placés des objets à sécher, une gaine de sortie d'air (5) et au moins un condenseur (6) dans lequel circule un fluide caloporteur, ledit procédé de séchage comprenant une phase d'accumulation de chaleur dans laquelle l'air de séchage est chauffé par les moyens de chauffage (4) dans la gaine d'amenée d'air (3) et refroidi par le condenseur (6) en sortie de l'enceinte de séchage (2), la fluide caloporteur étant stocké dans un réservoir (13) après passage dans le condenseur (6), et une phase d'utilisation de la chaleur accumulée dans laquelle l'air de séchage introduit dans la gaine d'amenée d'air (3) est chauffé par le fluide caloporteur stocké dans le réservoir (13), **caractérisé en ce que**, dans ladite phase d'utilisation, ledit air chauffé est introduit dans l'enceinte de séchage (2) puis refroidi par un condenseur (6, 18) en sortie de l'enceinte de séchage (2).

2. Procédé de séchage conforme à la revendication 1, **caractérisé en ce qu'**il comprend en outre une phase de montée en température dans laquelle l'air de séchage dans la gaine d'amenée d'air (3) est chauffé par les moyens de chauffage (4) et la circulation du fluide caloporteur dans le condenseur (6) est sensiblement nulle.

3. Procédé de séchage conforme à l'une des revendications 1 ou 2, **caractérisé en ce qu'**il comprend, entre ladite phase d'accumulation et ladite phase d'utilisation de la chaleur, une phase de refroidissement dans laquelle l'air de séchage est refroidi au travers d'un échangeur (18).

4. Procédé de séchage conforme à l'une des revendications 1 à 3, **caractérisé en ce qu'**à l'étape d'utilisation de la chaleur accumulée, les moyens de chauffage (4) de la gaine d'amenée d'air (3) sont inopérants.

5. Procédé de séchage conforme à l'une des revendications 1 à 4, **caractérisé en ce que** le fluide caloporteur circule dans un circuit fermé incluant le condenseur (6) et le réservoir (13), la phase d'accumulation de chaleur étant interrompue lorsque la température du fluide caloporteur dans le réservoir (13) atteint une température de consigne préfixée.

6. Procédé de séchage conforme à l'une des revendications 1 à 5, **caractérisé en ce qu'**il comprend plusieurs phases d'accumulation de chaleur et d'utilisation de la chaleur accumulée dans un cycle de séchage.

7. Procédé de séchage conforme à l'une des revendications 1 à 6, **caractérisé en ce que** le fluide caloporteur est de l'eau et **en ce qu'**il comprend une étape de renouvellement périodique de l'eau circulant dans le condenseur (6).

8. Appareil de séchage comprenant un circuit de circulation d'air de séchage comprenant:
- une gaine d'amenée d'air (3) comportant des moyens des chauffage (4) de l'air;
- une enceinte de séchage (2) dans laquelle sont placés des objets à sécher; et
- une gaine de sortie d'air (5) dans laquelle est disposée un condenseur (6) refroidi par un fluide caloporteur.
- un circuit de circulation (12) dudit fluide caloporteur comprenant successivement ledit condenseur (6) et un réservoir (13) adapté à stocker le fluide caloporteur chauffé en sortie du condenseur (6) **caractérisé en ce qu'**il comprend un autre échangeur de chaleur (14) disposé dans le circuit de circulation d'air en amont de l'enceinte de séchage (2).

9. Appareil de séchage conforme à la revendication 8, **caractérisé en ce que** le réservoir (13) comprend une série de chicanes (13') adaptées à former des compartiments entre une entrée (13a) et une sortie (13b) du réservoir.

10. Appareil de séchage conforme à la revendication 9, **caractérisé en ce que** le circuit de circulation (12) du fluide caloporteur comprend un premier réservoir (13) entre le condenseur (6) et l'échangeur de chaleur (14), adapté à stocker le fluide caloporteur chauffé en sortie du condenseur (6), et un second réservoir (16) disposé en sortie de l'échangeur de chaleur (14), adapté à stocker le fluide caloporteur refroidi.

11. Appareil de séchage conforme à l'une des revendications 8 à 10, **caractérisé en ce que** le circuit de circulation d'air de séchage comporte une arrivée d'air neuf (10) dans laquelle est logé l'échangeur de chaleur (14), et un clapet mobile (9) entre une position ouverte dans laquelle le circuit de circulation d'air (3) de séchage est ouvert, l'air neuf entrant dans la gaine d'amenée d'air et l'air de séchage étant évacué en sortie du condenseur (6), et une position fermée dans laquelle le circuit de circulation d'air de séchage est fermé, l'air en sortie du condenseur (6) étant réintroduit dans la gaine d'amenée d'air (3).

12. Appareil de séchage conforme à la revendication 10, **caractérisé en ce que** le circuit de circulation (12) de fluide caloporteur est un circuit fermé incluant successivement le premier réservoir (13), l'échangeur de chaleur (14), le second réservoir (16) et le condenseur (6).

13. Appareil de séchage conforme à la revendication 12, **caractérisé en ce qu'**il comprend en outre un second condenseur (18) disposé dans la gaine de sortie d'air (5).

14. Appareil de séchage conforme à l'une des revendications 8 à 13, **caractérisé en ce que** le fluide caloporteur est de l'eau.

15. Appareil de séchage conforme à l'une des revendications 8 à 14, **caractérisé en ce que** le ou les réservoirs (13, 16) sont calorifugés.

16. Appareil de séchage conforme à l'une des revendications 8 à 15, **caractérisé en ce qu'**il est adapté à mettre en oeuvre le procédé de séchage conforme à l'une des revendications 1 à 7.

17. Appareil de séchage conforme à l'une des revendications 8 à 16, **caractérisé en ce qu'**il est adapté à sécher du linge.

## Claims

1. Method of drying by the circulation of drying air in a circuit comprising an air inlet duct (3) comprising means (4) of heating the air, a drying enclosure (2) in which objects to be dried are placed, an air outlet duct (5) and at least one condenser (6) in which a heat-transfer fluid circulates, the said drying method comprising a heat accumulation phase in which the drying air is heated by the heating means (4) in the air inlet duct (3) and cooled by the condenser (6) on discharge from the drying enclosure (2), the heat-transfer fluid being stored in a reservoir (13) after passing through the condenser (6), and a phase of use of the accumulated heat in which the drying air introduced into the air inlet duct (3) is heated by the heat transfer fluid stored in the reservoir (13), **characterised in that**, in the said use phase, the said heated air is introduced into the drying enclosure (2) and then cooled by a condenser (6, 18) on discharge from the drying enclosure (2).

2. Drying method according to claim 1, **characterised in that** it also comprises a temperature rise phase in which the drying air in the air inlet duct (3) is heated by the heating means (4) and the circulation of heat transfer fluid in the condenser (6) is substantially zero.

3. Drying method according to one of claims 1 or 2, **characterised in that** it comprises, between the said accumulation phase and the said heat use phase, a cooling phase in which the drying air is cooled through an exchanger (18).

4. Drying method according to one of claims 1 to 3, **characterised in that**, at the step of use of the accumulated heat, the heating means (4) of the air inlet duct (3) are inoperative.

5. Drying method according to one of claims 1 to 4, **characterised in that** the heat transfer fluid circulates in a closed circuit including the condenser (6) and the reservoir (13), the heat accumulation phase being interrupted when the temperature of the heat transfer fluid in the reservoir (13) reaches a predetermined set temperature.

6. Drying method according to one of claims 1 to 5, **characterised in that** it comprises several phases of heat accumulation and use of the heat accumulated in a drying cycle.

7. Drying method according to one of claims 1 to 6, **characterised in that** the heat transfer fluid is water and **in that** it comprises a step of periodic renewal of the water circulating in the condenser (6).

8. Drying apparatus comprising a drying-air circulation circuit comprising:
- an air inlet duct (3) comprising means (4) of heating the air;
- a drying enclosure (2) in which objects to be dried are placed; and
- an air outlet duct (5) in which there is disposed a condenser (6) cooled by a heat transfer fluid;
- a circuit (12) for circulation of the said heat transfer fluid comprising successively the said condenser (6) and a reservoir (13) adapted to store the heated heat transfer fluid at the discharge from the condenser (6), **characterised in that** it comprises another heat exchanger (14) disposed in the air circulation circuit upstream of the drying enclosure (2).

9. Drying apparatus according to claim 8, **characterised in that** the reservoir (13) comprises a series of baffles (13') adapted to form compartments between an inlet (13a) and an outlet (13b) of the reservoir.

10. Drying apparatus according to claim 9, **characterised in that** the heat transfer fluid circulation circuit (12) comprises a first reservoir (13) between the condenser (6) and the heat exchanger (14), adapted to store the heated heat transfer fluid discharged from the condenser (6), and a second reservoir (16) disposed at the discharge from the heat exchanger (14), adapted to store the cooled heat transfer fluid.

11. Drying apparatus according to one of claims 8 to 10, **characterised in that** the drying air circulation circuit comprises a new-air inlet (10) in which the heat exchanger (14) is housed, and a valve (9) able to move between an open position in which the drying air circulation circuit (3) is open, the new air entering the air-inlet duct and the drying air being discharged at the outlet from the capacitor (6), and a closed position in which the drying air circulation circuit is closed, the air discharged from the condenser (6) being reintroduced into the air inlet duct (3).

12. Drying apparatus according to claim 10, **characterised in that** the heat transfer fluid circulation circuit (12) is a closed circuit including successively the first reservoir (13), the heat exchanger (14), the second reservoir (16) and the condenser (6).

13. Drying apparatus according to claim 12, **characterised in that** it also comprises a second condenser (18) disposed in the air outlet duct (5).

14. Drying apparatus according to one of claims 8 to 13, **characterised in that** the heat transfer fluid is water.

15. Drying apparatus according to one of claims 8 to 14, **characterised in that** the reservoir or reservoirs (13, 16) are heat-insulated.

16. Drying apparatus according to one of claims 8 to 15, **characterised in that** it is adapted to implement the drying method according to one of claims 1 to 7.

17. Drying apparatus according to one of claims 8 to 16, **characterised in that** it is adapted to dry laundry.

## Patentansprüche

1. Verfahren zum Trocknen durch die Zirkulation von Trocknungsluft in einem Kreis, der einen Luftzuführungskanal (3) mit Mitteln (4) zur Erwärmung der Luft, eine Trocknungskammer (2), in die zu trocknende Gegenstände eingelegt sind, einen Luftabführungskanal (5) und mindestens einen Kondensator (6) aufweist, in welchem ein wärmeübertragendes Fluid zirkuliert, wobei das Trocknungsverfahren eine Phase zur Wärmespeicherung umfasst, in der die Trocknungsluft durch die Heizmittel (4) im Luftzuführungskanal (3) erwärmt und beim Austreten aus der Trocknungskammer (2) durch den Kondensator (6) abgekühlt wird, wobei das wärmeübertragende Fluid in einem Behälter (13) gesammelt wird, nachdem es durch den Kondensator (6) geströmt ist, und eine Phase zur Verwendung der gespeicherten Wärme, in der die in den Luftzuführungskanal (3) eingeleitete Trocknungsluft durch das im Behälter (13) gesammelte wärmeübertragende Fluid erwärmt wird, **dadurch gekennzeichnet, dass** in der Verwendungsphase die erwärmte Luft in die Trocknungskammer (2) eingeleitet und anschließend beim Austreten aus der Trocknungskammer (2) durch einen Kondensator (6, 18) abgekühlt wird.

2. Trocknungsverfahren nach Anspruch 1, **dadurch gekennzeichnet, dass** es ferner eine Temperaturanstiegsphase umfasst, in der die Trocknungsluft im Luftzuführungskanal (3) durch die Heizmittel (4) erwärmt wird und im Wesentlichen keine Zirkulation des wärmeübertragenden Fluids im Kondensator (6) stattfindet.

3. Trocknungsverfahren nach Anspruch 1 oder 2, **dadurch gekennzeichnet, dass** es zwischen der Wärmespeicherungsphase und der Wärmeverwendungsphase eine Abkühlungsphase umfasst, in der die Trocknungsluft mittels eines Tauschers (18) abgekühlt wird.

4. Trocknungsverfahren nach einem der Ansprüche 1 bis 3, **dadurch gekennzeichnet, dass** die Heizmittel (4) des Luftzuführungskanals (3) bei dem Schritt, bei dem die gespeicherte Wärme verwendet wird, nicht wirksam sind.

5. Trocknungsverfahren nach einem der Ansprüche 1 bis 4, **dadurch gekennzeichnet, dass** das wärmeübertragende Fluid in einem geschlossenen Kreis zirkuliert, der den Kondensator (6) und den Behälter (13) aufweist, wobei die Wärmespeicherungsphase unterbrochen wird, wenn die Temperatur des wärmeübertragenden Fluids im Behälter (13) eine vorbestimmte Solltemperatur erreicht.

6. Trocknungsverfahren nach einem der Ansprüche 1 bis 5, **dadurch gekennzeichnet, dass** es in einem Trocknungszyklus mehrere Phasen zur Speicherung der Wärme und zur Verwendung der gespeicherten Wärme umfasst.

7. Trocknungsverfahren nach einem der Ansprüche 1 bis 6, **dadurch gekennzeichnet, dass** das wärmeübertragende Fluid Wasser ist und das Verfahren einen Schritt umfasst, bei dem das im Kondensator (6) zirkulierende Wasser periodisch erneuert wird.

8. Trocknungsgerät mit einem Kreis zur Zirkulation der Trocknungsluft, der folgendes aufweist:
- einen Luftzuführungskanal (3) mit Mitteln (4) zur Erwärmung der Luft;
- eine Trocknungskammer (2), in die zu trocknende Gegenstände eingelegt sind; und
- einen Luftabführungskanal (5), in dem ein Kondensator (6) angeordnet ist, der von einem wärmeübertragenden Fluid abgekühlt wird,
- wobei ein Kreis (12) zur Zirkulation des wärmeübertragenden Fluids nacheinander den Kondensator (6) und einen Behälter (13) aufweist, der dazu geeignet ist, das erwärmte wärmeübertragende Fluid beim Austreten aus dem Kondensator (6) zu sammeln, **dadurch gekennzeichnet, dass** es einen weiteren Wärmetauscher (14) aufweist, der im Luftzirkulationskreis stromaufwärts der Trocknungskammer (2) angeordnet ist.

9. Trocknungsgerät nach Anspruch 8, **dadurch gekennzeichnet, dass** der Behälter (13) eine Reihe von Lenkblechen (13') aufweist, die dazu geeignet sind, zwischen einem Eingang (13a) und einem Ausgang (13b) des Behälters Räume zu bilden.

10. Trocknungsgerät nach Anspruch 9, **dadurch gekennzeichnet, dass** der Kreis (12) zur Zirkulation des wärmeübertragenden Fluids zwischen dem Kondensator (6) und dem Wärmetauscher (14) einen ersten Behälter (13) aufweist, der dazu geeignet ist, das erwärmte wärmeübertragende Fluid beim Austreten aus dem Kondensator (6) zu sammeln, und einen zweiten Behälter (16), der am Ausgang des Wärmetauschers (14) angeordnet und dazu geeignet ist, das abgekühlte wärmeübertragende Fluid zu sammeln.

11. Trocknungsgerät nach einem der Ansprüche 8 bis 10, **dadurch gekennzeichnet, dass** der Kreis zur Zirkulation der Trocknungsluft einen Einlass (10) für neue Luft, in dem der Wärmetauscher (14) angeordnet ist, und ein Ventilelement (9) aufweist, das zwischen einer offenen Position, in welcher der Kreis (3) zur Zirkulation der Trocknungsluft offen ist, wobei die neue Luft in den Luftzuführungskanal eintritt und die Trocknungsluft beim Austreten aus dem Kondensator (6) abgeleitet wird, und einer geschlossenen Position beweglich ist, in welcher der Kreis zur Zirkulation der Trocknungsluft geschlossen ist, wobei die aus dem Kondensator (6) austretende Luft erneut in den Luftzuführungskanal (3) eingeleitet wird.

12. Trocknungsgerät nach Anspruch 10, **dadurch gekennzeichnet, dass** der Kreis (12) zur Zirkulation des wärmeübertragenden Fluids ein geschlossener Kreis ist, der nacheinander den ersten Behälter (13), den Wärmetauscher (14), den zweiten Behälter (16) und den Kondensator (6) aufweist.

13. Trocknungsgerät nach Anspruch 12, **dadurch gekennzeichnet, dass** es ferner einen zweiten Kondensator (18) aufweist, der im Luftabführungskanal (5) angeordnet ist.

14. Trocknungsgerät nach einem der Ansprüche 8 bis 13, **dadurch gekennzeichnet, dass** das wärmeübertragende Fluid Wasser ist.

15. Trocknungsgerät nach einem der Ansprüche 8 bis 14, **dadurch gekennzeichnet, dass** der oder die Behälter (13, 16) wärmeisoliert sind.

16. Trocknungsgerät nach einem der Ansprüche 8 bis 15, **dadurch gekennzeichnet, dass** es dazu geeignet ist, das Trocknungsverfahren nach einem der Ansprüche 1 bis 7 anzuwenden.

17. Trocknungsgerät nach einem der Ansprüche 8 bis 16, **dadurch gekennzeichnet ist, dass** es zum Trocknen von Wäsche geeignet ist.
